# EUROPÄISCHE PATENTSCHRIFT

(11) **EP 2 150 743 B1**
(45) Veröffentlichungstag und Bekanntmachung des Hinweises auf die Patenterteilung: **13.06.2012**
(21) Anmeldenummer: 08760345.2
(22) Anmeldetag: 02.06.2008
(51) Int. Cl.: F16L 33/03

(54) **KLEMMFITTING FUER EIN ROHR**
CLAMPING FITTING FOR A PIPE
ELEMENT RACCORD DE SERRAGE POUR UN TUYAU

(30) Priorität: 02.06.2007 DE 102007025931
(43) Veröffentlichungstag der Anmeldung: 10.02.2010
(73) Patentinhaber: Uponor Innovation AB, 513 81 Fristad (SE)
(72) Erfinder: RIPPSTEIN, Klaus, 97500 Ebelsbach (DE)
(74) Vertreter: Epping - Hermann - Fischer
(86) Internationale Anmeldenummer: PCT/EP2008/056758
(87) Internationale Veröffentlichungsnummer: WO 2008/148728

(56) Entgegenhaltungen:
- EP-A- 1 122 485
- EP-A- 1 662 190
- DE-A1- 19 902 265
- US-A- 4 635 966

## Beschreibung

Die Erfindung betrifft einen Klemmfitting für ein Rohr und insbesondere einen Klemmfitting für ein Kunststoffrohr oder Kunststoff-Metall-Verbundrohr.

Derartige Klemmfittinge sind im Stand der Technik hinlänglich bekannt und weisen einen Fittingkörper auf, der mit einer Stützhülse versehen ist, auf die das Ende eines anzuschließenden Rohres aufschiebbar ist. Außen um das auf die Stützhülse aufgeschobene Anschlussende des Rohres befindet sich eine Hülse, die mit Hilfe eines Presswerkzeuges radial gestaucht wird und damit das Anschlussende des Rohres in die Stützhülse presst, wodurch einerseits die erforderliche Dichtigkeit und andererseits eine Zugentlastung gegeben ist.

Diese Pressfittingtechnik hat sich in der Praxis bewährt und wird insbesondere für den Anschluss von Kunststoffrohren oder Kunststoff-Metall-Verbundrohren eingesetzt.

Zur Vermeidung der Verwendung von Presswerkzeugen wurde bereits in der Vergangenheit vorgeschlagen, anstelle einer Presshülse eine Klemm- bzw. Spannhülse zu verwenden. Dies ist in DE-C-39 11 406 beschrieben. Bei diesem bekannten Klemmfitting wird zum Andrücken des Anschlussendes des Rohres gegen die Stützhülse eine geschlitzte, aufgeweitete Klemmhülse aus Metall verwendet, die auf Grund ihrer Rückstellfähigkeit infolge der Aufweitung das Anschlussende des Rohres mit ausreichender Andrückkraft gegen die Stützhülse drückt. Bei der Montage der bekannten Klemmhülse ist der Einsatz eines Spreiz-Werkzeuges erforderlich, mit dem die Klemmhülse im aufgeweiteten Zustand gehalten wird, wenn sie auf das auf die Stützhülse aufgeschobene Anschlussende des Rohres aufgeschoben wird.

EP 1 122 485 zeigt einen Klemmfitting mit einer Stützhülse, auf die ein Rohr aufschiebbar ist. Der Klemmfitting umfasst außerdem einen Klemmring mit einem Schlitz entlang der Längsachse. Der Klemmring weist eine radiale elastische Vorspannkraft auf, die im aufgeweiteten Zustand des Klemmrings auf ein Aufweitungsstück innerhalb des Schlitzes wirkt. Bei Aufschieben des Rohres wird das Aufweitungsstück aus dem Schlitz des Klemmrings entfernt und das Rohr mit dem Klemmfitting fixiert.

Ferner ist aus EP-A-0 849 519 ein Befestigungselement zum Fixieren von flexiblen Schutzschläuchen bekannt, das eine federnde Klemmhülse aufweist, welche durch radialen Druck eine Vorspannkraft zur Fixierung eines Schutzschlauches erzeugt. Die Klemmhülse lässt sich mittels eines Werkzeuges aufspreizen.

Aufgabe der Erfindung ist es, einen Klemmfitting für ein Rohr, insbesondere Kunststoffrohr oder Kunststoff-Metall-Verbundrohr zu schaffen, bei dem die auf das anzuschließende Rohr wirkende Andrückkraft ohne Verwendung eines Presswerkzeuges aufgebracht wird und bei dem die Montage der Klemmhülse vereinfacht ist.

Zur Lösung dieser Aufgabe wird mit der Erfindung ein Klemmfitting für ein Rohr, insbesondere Kunststoffrohr oder Kunststoff-Metall-Verbundrohr vorgeschlagen, der versehen ist mit
- einem Fittingkörper, der eine Stützhülse aufweist, auf die ein Ende eines anzuschließenden Rohres aufschiebbar ist, und
- einer eine Wandung aufweisenden Klemmhülse, die einen zwischen ihren axialen Enden verlaufenden, von gegenüberliegenden Flanken der Wandung begrenzten Schlitz aufweist und aufweitbar ist, wobei die Klemmhülse die Stützhülse und das Ende des anzuschließenden Rohres im auf die Stützhülse aufgeschobenen Zustand umgibt.

Bei diesem Klemmfitting ist vorgesehen, dass zur Beibehaltung des aufgeweiteten Zustandes der Klemmhülse in deren Schlitz ein entfernbarer Abstandshalter angeordnet ist, gegen den sich die den Schlitz begrenzenden Flanken der Wandung der aufgeweiteten Klemmhülse abstützen

Der erfindungsgemäße Klemmfitting umfasst eine Spann- oder Klemmhülse, die mindestens einen Schlitz aufweist, der sich zwischen den axialen Enden der Klemmhülse erstreckt. Infolge des Schlitzes kann die Klemmhülse, die im Regelfall aus Metall besteht bzw. Metall aufweist, aufgeweitet werden, wobei sich die Klemmhülse elastisch verformt und eine Rückstellkraft erzeugt, die dann, wenn die Klemmhülse das auf die Stützhülse des Fittingkörpers aufgeschobene Anschlussende des Rohres umgibt, zum Andrücken des Anschlussendes des Rohres gegen die Stützhülse genutzt wird. Hierbei übernimmt also die Klemmhülse sozusagen die Aufgabe des Presswerkzeuges bzw. die Presshülse übernimmt die Funktion des Presswerkzeuges.

Es ist vorgesehen, dass die Klemmhulse durch Anordnung eines Abstandshalters in dem Schlitz in ihrem aufgeweiteten Zustand gehalten wird, wobei die den Schlitz begrenzenden Flanken der Wandung der aufgeweiteten Stützhülse an dem Abstandshalter anliegen. Der Abstandshalter vereinfacht die Handhabung und Montage der Klemmhülse ganz entscheidend, da die Klemmhülse, ohne von einem Aufspreizwerkzeug manipuliert zu sein, selbsttätig in ihrem aufgeweiteten Zustand verbleibt. Der Abstandshalter kann werkseitig in den Schlitz der Klemmhülse eingebracht sein oder aber wird vor der Montage der Klemmhülse vom Monteur in den Schlitz verbracht.

Der Abstandshalter kann zweckmäßigerweise mittels eines Werkzeuges aus dem Schlitz der Klemmhülse entfernt werden, um die Klemmhülse "freizugeben". Alternativ ist es möglich, dass der Abstandshalter ein Handhabungsorgan zum manuellen Entfernen des Abstandshalters aus dem Schlitz der Klemmhülse aufweist. Ein geeignetes Handhabungsorgan ist beispielsweise ein Ringelement, das mit dem Abstandshalter verbunden ist oder integral am Abstandshalter ausgebildet ist. Andere Anfassorgane wie beispielsweise Hakenelemente o.dgl. können ebenfalls am Abstandshalter vorgesehen sein, um diesen manuell aus dem Schlitz der Klemmhülse entfernen zu können.

Anstelle einer manuellen Entfernung des Abstandshalters oder einer Entfernung durch ein Werkzeug ist es auch möglich, dass der Abstandshalter automatisch bei der Montage der Klemmhülse bzw. beim Anschließen des Rohres aus dem Schlitz entfernt wird. Hierzu ist bei einer ersten Variante der Erfindung vorgesehen, dass der Fittingkörper ein Auswerferelement aufweist, gegen und/oder über das der Abstandshalter beim Aufschieben der aufgeweiteten Klemmhülse über das auf der Stützhülse befindliche Ende des anzuschließenden Rohres zum Herausbewegen des Abstandshalters aus dem Schlitz bewegbar ist. Bei dieser Variante weist der Fittingkörper ein Auswerferelement auf, gegen das der Abstandshalter beim Aufschieben der aufgeweiteten Hülse läuft und von dem Auswerferelement in im wesentlichen radialer Richtung der Klemmhülse ausgelenkt und damit "ausgeworfen" wird.

Bei einer nicht zur Erfindung gehörenden Variante zum automatischen Entfernen des Abstandshalters aus dem Schlitz der Klemmhülse bei der Montage des Fittings ist vorgesehen, dass der Abstandshalter einen die Wandung der Klemmhülse über deren Innenseite überragenden Auslöseabschnitt aufweist und dass das Ende des anzuschließenden Rohres beim Aufschieben auf die Stützhülse und bei diese umgebender Klemmhülse zum Herausbewegen des Abstandshalters aus dem Schlitz der Klemmhülse gegen den Auslöseabschnitt des Abstandshalters bewegbar ist. Hierbei kann die Klemmhülse im aufgeweiteten Zustand am Fittingkörper vormontiert sein. Wird dann das anzuschließende Rohrende in den Bereich zwischen der Klemmhülse unter der Stützhülse geschoben, kommt es in Kontakt mit dem Auslöseabschnitt des Abstandshalters, da dieser Auslöseabschnitt in den Ringraum zwischen der Klemmhülse und der Stützhülse hineinragt, und zwar am Ende dieses Ringraums, in das das anzuschließende Rohrende hineinbewegt wird, kurz bevor es vollständig in den Ringraum eingeschoben ist.

Zur Verbesserung des Halts der Klemmhülse auf dem Anschlussende des Rohres kann die Innenseite der Klemmhülse strukturiert sein, was beispielsweise durch ein Sägezahnprofil, Noppen oder eine aufgeraute Oberfläche realisiert werden kann.

Die Klemmhülse weist zweckmäßigerweise einen Werkstoff auf bzw. die Dicke ihrer Wandung ist derart gewählt, dass nach Aufhebung einer elastischen Aufweitung der Klemmhülse diese das Ende des anzuschließenden Rohres dichtend und zugentlastend gegen die Stützhülse drückt. Als Material eignen sich z.B. Metalle und Metalllegierungen. Insbesondere kommen sogenannte superplastische Materialien (insbesondere metallische Materialien) wie z.B. Formgedächtnislegierungen in Frage. Ein Beispiel für eine superplastische Legierung ist eine NiTi-Legierung, wie z.B. Nitinol. Superplastische metallische Materialien zeichnen sich durch eine Kraft-Weg-Kennlinie mit einem Plateau aus, das einen Kraftverlauf beschreibt, bei dem die Kraft über einen Teilbereich des Weges im wesentlichen konstant bleibt.

Für die Handhabung des erfindungsgemäßen Klemmfittings ist es ferner zweckmäßig, wenn die Klemmhülse im aufgeweiteten Zustand an dem Fittingkörper gehalten ist, und zwar unter Ermöglichung einer Kontraktion bei entferntem Abstandshalter.

Der Abstandshalter kann darüber hinaus auch der Verpresskennzeichnung des Klemmfittings dienen. Sobald nämlich der Abstandshalter nicht mehr vorhanden ist, drückt die Klemmhülse das anzuschließende Rohrende dichtend und zugentlastend gegen die Stützhülse. Der (Klemm-)Fitting ist also "verpresst". Der Abstandshalter sollte also aus der Entfernung gut erkennbar sein, so dass man dann, wenn man keinen Abstandshalter erkennt, auch zuverlässig davon ausgehen kann, dass die Klemmhülse freigegeben ist, also klemmend auf dem anzuschließenden Rohrende sitzt und dieses gegen die Stützhülse drückt.

Die Klemmhülse weist im Regelfall eine im wesentlichen zentrische, elliptische oder andere ringartige Struktur auf.

Die Anpressung des Rohrendes durch die Presshülse sollte in jeder Radialebene der Stützhülse über 360° erfolgen. Innerhalb des Schlitzes erfolgt jedoch keine oder nur eine geringe Anpressung, insbesondere wenn es zu einer Quetschung des Materials des Rohres kommt. Von Vorteil ist es insoweit, wenn der Schlitz einen wellen- bzw. sinusförmigen Verlauf entlang der Axialerstreckung der Presshülse aufweist. Damit sind die Umfangsbereiche des Rohrendes, in denen dieses wegen des im verpressten Zustand offenen Schlitzes weniger stark gegen die Stützhülse gedrückt ist, in benachbarten Radialebenen längs der Axialerstreckung der Presshülse in Umfangsrichtung versetzt zueinander angeordnet.

Die Besonderheiten des erfindungsgemäßen Klemmfittings werden nachfolgend nochmals wie folgt wiedergegeben.

Die Klemmhülse des Klemmfittings ist selbstverriegelnd und übernimmt die Funktion, die eine Presshülse nach ihrer Verpressung hat.
1. Die Klemmhülse wird im einfachsten Fall als Rohrkörper hergestellt. In der einfachsten Ausführung weist die Klemmhülse einen zentrischen oder elliptischen Querschnitt auf. Die Innengeometrie der Klemmhülse ist entsprechend dem Außendurchmesser des anzuschließenden Rohres zu wählen. Im aufgeweiteten Zustand kann eine Spielpassung oder aber auch eine Übergangspassung zum anzuschließenden Rohr bestehen. Nach Aufhebung der auf dem Anschlussende des Rohres sitzenden Klemmhülse sollte deren Schlitz nicht vollständig geschlossen sein, da dies die Andrückkraft der Klemmhülse gegen das anzuschließende Rohrende begrenzt. Das Innenprofil der Klemmhülse kann sowohl glatt als auch mit Konturen (beispielsweise Sägezahnprofil, Noppen) und/oder mit aufgerauter Oberfläche versehen sein.
2. Die axiale Länge der Klemmhülse sollte entsprechend den Längen heutiger üblicher Presshülsen gewählt werden.
3. Die Dicke der Wandung ist ebenfalls abhängig vom Werkstoff und der erforderlichen Andrückkraft geeignet zu wählen.
4. Der Werkstoff der Klemmhülse (vorzugsweise Metall) ist zweckmäßigerweise hinreichend korrosionsbeständig und/oder beschichtet.
5. Die Klemmhülse des erfindungsgemäßen Klemmfittings ist mindestens einmal axial unter einem Winkel zwischen 0° und 85° zur Längsachse geschlitzt. Die Schlitzung kann auch als Gewinde/Wendelnut mit im wesentlichen beliebiger Steigung und sowohl ein- als auch mehrgängig erfolgen. Hierbei kann die Klemmhülsenwandung ganz und/oder teilweise durchdrungen sein. Die Durchdringung erfolgt innerhalb eines Winkelbereichs zwischen 90° zur Klemmhülsenoberfläche (parallel zur Längsachse) und einem Grenzwinkel > 0°, der bei gegebenem Rohrkörper noch zur Erzeugung einer brauchbaren Kontur führt. Die Kontur der Durchdringung (Schlitzung) in radialer Richtung kann mit beliebigen Böschungs- bzw. Flankenwinkeln ausgeführt sein. Bei einer vorteilhaften Ausführung kann der Flankenwinkel im Bereich der Selbsthemmung von Teilen liegen, wobei die geneigten Flankenwinkel derart gewählt sind, dass sich die Breite des Schlitzes von der Innen- zur Außenseite der Klemmhülse hin vergrößert. Die Kontur der Durchdringung (Schlitzung) in axialer Richtung kann von gleichbleibender Breite (einfachster Fall wäre ein gerader Schlitz) bis zu beliebig strukturierten Ausführungen (beispielsweise gewellt mit und ohne Hinterschnitt) in Umfangsrichtung reichen. Bei alldem ist zu beachten, dass sich infolge der Erstreckung und Ausrichtung des Schlitzes eine Klemmhülse ergibt, die in radialer Richtung über eine größere Elastizität als in axialer Richtung verfügt, in axialer Richtung also eine größere Steifigkeit als in radialer Richtung aufweist.
6. Die zuvor beschriebene Klemmhülse wird mit Hilfe des Abstandshalters im radial aufgeweiteten Zustand gehalten.
7. Beispiele für Abstandshalter sind ein Metallprisma (Teilleisten o.dgl.) oder aber auch Elemente mit und ohne Eigenfederung. Es sind ferner als Abstandshalter Elemente mit Radien denkbar, beispielsweise runde oder rohrförmige Elemente. Die Länge des Abstandshalters ist grundsätzlich beliebig, sollte aber nicht größer als die Schlitzlänge sein. Der Abstandshalter und die weiter oben beschriebenen Ausführungsformen der Schlitzkontur bilden eine funktionale Einheit mit dem Ziel der Funktionssicherheit.
8. Die Einheit aus Klemmhülse und Abstandshalter kann beispielsweise mittels eines Zwischenstücks (Haltering o.dgl.) am Fittingkörper befestigt sein. Beispielsweise könnte es sich hierbei um einen Kunststoffring handeln, der einerseits an dem Fittingkörper befestigt ist und andererseits die aufgeweitete Klemmhülse aufnimmt, also außen an der Klemmhülse angreift. Hier können noch Aussparungen zur Kontrolle der Rohreinschubtiefe vorgesehen sein. Dadurch kann der Fittingkörper einschließlich der Stützhülse einfacher gestaltet sein.
9. Es ist ebenfalls möglich, den Fittingkörper und die Klemmhülse getrennt, also nicht vormontiert, zu liefern.
10. Zur Montage wird das anzuschließende Rohrende (bei am Fittingkörper vormontierter aufgeweiteter Klemmhülse) in den Ringraum zwischen der Stützhülse und der Klemmhülse eingeführt. Nach Erreichen der erforderlichen Einschubtiefe des Rohres wird mittels eines Werkzeuges oder manuell der Abstandshalter aus dem Schlitz der Hülse nach außen herausgezogen. Dadurch federt die Klemmhülse zurück und presst das Rohr gegen die Stützhülse. Die Verpresskraft reicht dabei aus, um sowohl eine Fluidabdichtung als auch eine Abzugssicherheit zu erreichen.
11. Das Konzept des Klemmfittings bringt eine integrierte "Verpresskennzeichnung" mit sich. Fehlt der Abstandshalter, ist die Verbindung "verpresst".
12. Alternativ zu der Entfernung des Abstandshalters durch manuellen Eingriff oder durch Verwendung eines Werkzeuges ist es auch möglich, die Montage werkzeuglos durchzuführen. Hierbei kann der Abstandshalter beim Einschieben des anzuschließenden Rohrendes von diesem ausgeworfen werden. Erreicht werden kann dies beispielsweise durch eine Ausbildung des Abstandshalter in demjenigen Bereich, in dem er von dem Rohr kontaktiert wird. In diesem Bereich kann der Abstandshalter Radien oder Schrägen aufweisen. Die Rohrstirnseite des eingeschobenen Rohres läuft gegen diese Radien oder Schrägen, wodurch der Abstandshalter angehoben und "ausgeworfen" wird. Vorteilhaft zur Erreichen dieses Effekts ist eine getrennte Bereitstellung der Klemmhülse. Die Montage erfolgt dann durch Aufschieben der Klemmhülse auf das anzuschließende Rohrende, woraufhin beide zusammen auf die Stützhülse bzw. über die Stützhülse geschoben werden. Am Fittingkörper kann nun eine entsprechende Gegenkontur vorgesehen sein, die als Anschlag für den Abstandshalter dient, wenn das Rohrende und die Klemmhülse aufgeschoben werden. Beim Auflaufen des Abstandshalters gegen diesen Anschlag wird der Abstandshalter angehoben und dadurch aus dem Schlitz bewegt.

Die Erfindung wird nachfolgend anhand verschiedener Ausführungsbeispiele und unter Bezugnahme auf die Zeichnung näher erläutert. Im einzelnen zeigen dabei:
- Fig. 1: eine Seitenansicht auf ein einen Klemmfitting mit klemmend auf dem anzuschließenden Rohrende sitzender Klemmhülse,
- Fig. 2: eine Variante einer Klemmhülse mit schräg zur Längsachse verlaufender Schlitzung,
- Fign. 3 bis 5: Querschnitte durch verschiedene Klemmhülsen zur Verdeutlichung unterschiedlich ausgerichteter und gestalteter Schlitzungen sowie unterschiedlich strukturierter Innenflächen der Klemmhülse,
- Fign. 6 bis 10: Querschnitte weiterer Ausführungsbeispiele von Klemmhülsen zur Darstellung der unterschiedlichen Formen möglicher Abstandshalter zur Aufrechthaltung des aufgeweiteten Zustandes der Klemmhülse,
- Fign. 11 und 12: Längsschnitte durch von Abstandshaltern im aufgeweiteten Zustand gehaltenen, geschlitzten Klemmhülsen, wobei die Abstandshalter mit Hilfe von Werkzeugen aus den Schlitzen entfernbar sind,
- Fign. 13 und 14: Halbschnitte bzw. Seitenansichten eines weiteren Ausführungsbeispiels eines Klemmfittings mit bei der Montage selbsttätig entfernbarem Abstandshalter,
- Fign. 15 und 16: einen Klemmfitting im Längsschnitt und in Seitenansicht, wobei der Abstandshalter beim Einschieben des Rohres selbsttätig ausgeworfen wird, und
- Fig. 17: einen Klemmfitting im Längsschnitt mit beim Einschieben des Rohres automatisch aus dem Schlitz der Klemmhülse sich herausbewegendem Abstandshalter.

In der Zeichnung sind eine Vielzahl von unterschiedlichen Ausführungsformen des Klemmfittings bzw. der Klemmhülse und des Abstandshalters gezeigt. Soweit die in den einzelnen Figuren gezeigten Bestandteile des Klemmfittings funktional oder konstruktiv gleich sind, sind sie mit dem gleichen Bezugszeichen versehen.

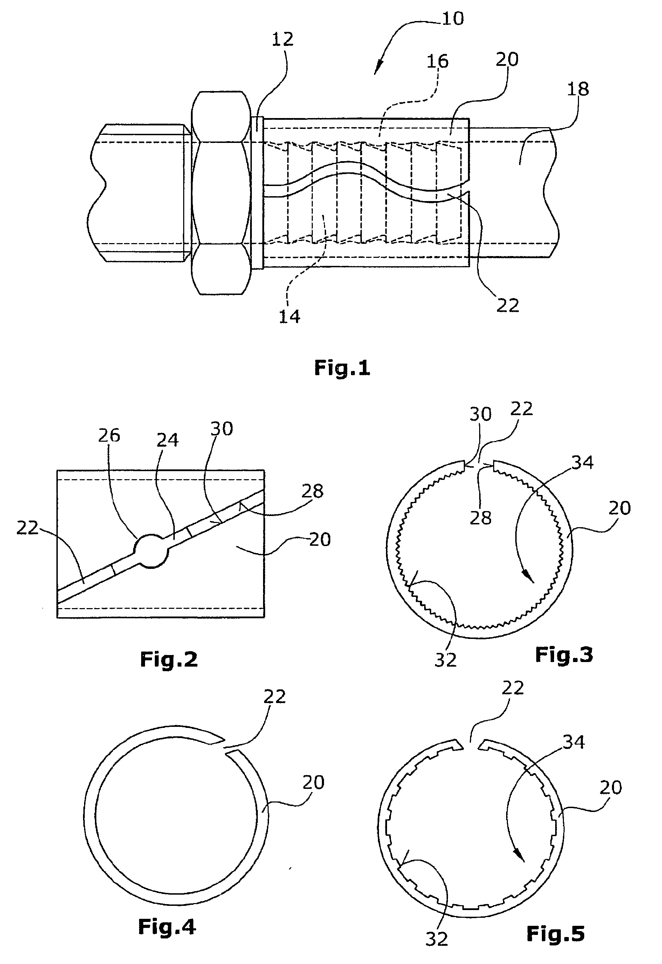

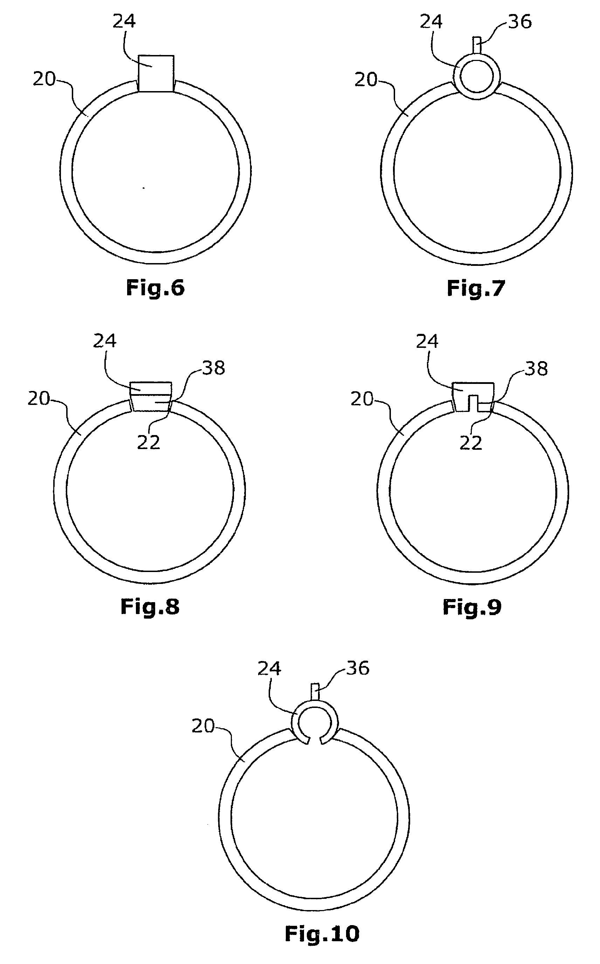

Fig. 1 zeigt einen Klemmfitting 10 im montierten Zustand. Der Klemmfitting 10 weist einen Fittingkörper 12 auf, der mit einer Stützhülse 14 versehen ist. Diese Stützhülse 14 kann an ihrer Außenseite profiliert sein und/oder ein Dichtungselement (z.B. O-Ring) aufweisen. Auf die Stützhülse ist das Ende 16 eines anzuschließenden Rohres 18 aufgeschoben. Dieses Anschlussende 16 wiederum ist von einer geschlitzten Klemmhülse 20 umschlossen, die in diesem Ausführungsbeispiel wellenförmig verlaufenden Schlitz 22 aufweist. Die Klemmhülsen 20 wurde im aufgeweiteten Zustand auf das Anschlussende 16 des Rohres 18 aufgeschoben, wozu in den Schlitz 22 der Klemmhülse 20 ein Abstandshalter 24 eingeschoben war, wie es beispielsweise in den Fign. 6 bis 17 gezeigt ist.

Fig. 2 zeigt ein weiteres Ausführungsbeispiel der Klemmhülse 20 mit schräg verlaufendem Schlitz 22 und in diesem angeordnetem Abstandshalter 24, der eine Ausformung aufweist, die entsprechend einer Aufweitung 26 im Schlitz 22 ausgebildet ist. Der Schlitz 22 wird gebildet durch Flanken 28,30 der Wandung der Klemmhülse 20. Der Abstandshalter 24 liegt an den Flanken 28,30 an und hält diese auf Abstand, d.h. die Klemmhülse 20 im aufgeweiteten Zustand.

Fign. 3 bis 5 zeigen verschiedene Ausführungsformen für den Schlitz 22. So ist der Schlitz 22 bei der Klemmhülse 20 der Fig. 3 im wesentlichen radial ausgerichtet und weist im wesentlichen parallel zueinander verlaufende Flanken 28,30 auf. Bei dem Ausführungsbeispiel der Klemmhülse 20 gemäß Fig. 4 verläuft der Schlitz 22 winklig zur Radialerstreckung der Klemmhülse 20. In Fig. 5 ist der Schlitz 22 nach außen aufgeweitet. Darüber hinaus zeigen die Fign. 3 und 4 unterschiedliche Oberflächenkonturen 32 auf der Innenseite 34 der Klemmhülse 20. Hierdurch kann eine erhöhte Sicherheit der Klemmhülse 20 gegen axialer Verschiebungen relativ zum Anschlussende 16 des Rohres 18 erreicht werden.

In den Fign. 6 bis 10 sind unterschiedliche Abstandshalter 24 zur Aufrechterhaltung der Aufweitung der Klemmhülse 20 gezeigt. Im Ausführungsbeispiel gemäß Fig. 6 ist der Abstandshalter 24 mit rechteckigem Querschnitt gezeigt. Fig. 7 zeigt einen Abstandshalter 24 mit runder Kontur und einer Handhabe bzw. einem Handhabungsorgan 36 zum Ergreifen des Abstandshalters 24 mit Hilfe eines Werkzeuges zwecks Entfernung des Abstandshalter 24 aus dem Schlitz 22. Fig. 8 zeigt einen Abstandshalter 24 mit keilförmigem Abschnitt 38, dessen Keilform an die Keilform des Schlitzes 22 angepasst ist. In den Fign. 9 und 10 weisen die Abstandshalter 24 jeweils Federeigenschaften auf.

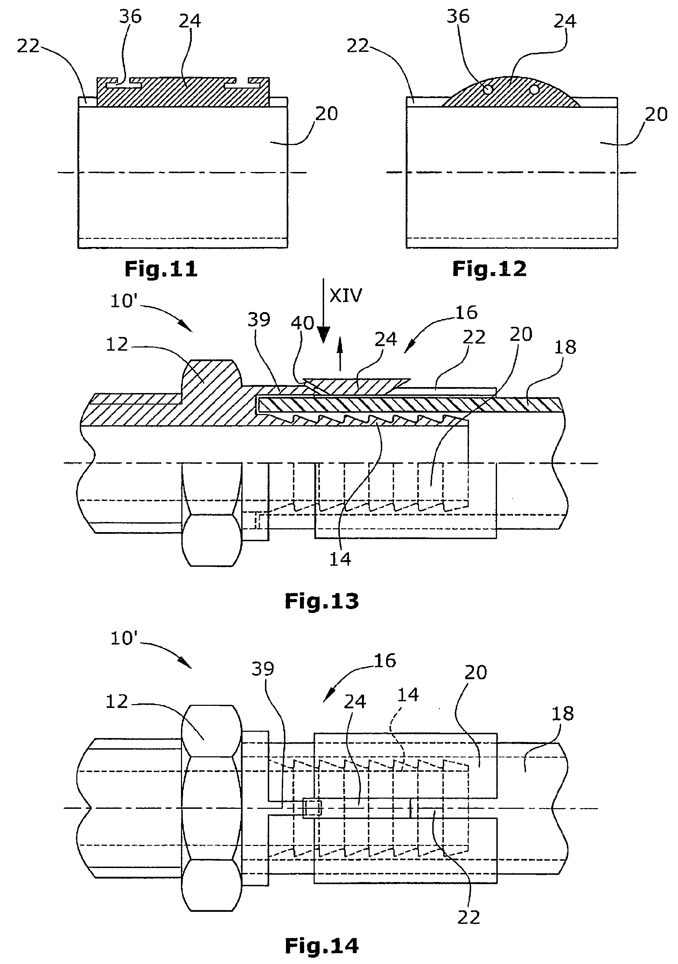

In den Fign. 11 und 12 sind zwei Klemmhülsen 20 mit in ihren Schlitzen 22 befindlichen Abstandshaltern 24 gezeigt, die über Handhabungsorgane 36 in Form von in diesem Ausführungsbeispiel Aussparungen verfügen, die das Ansetzen von Werkzeugen zum Herausziehen der Abstandshalter 24 aus den Schlitzen 22 ermöglichen.

In den Fign. 13 und 14 ist ein Ausführungsbeispiel eines Klemmfittings 10' gezeigt, bei dem der Abstandshalter 24 der Klemmhülse 20 selbsttätig entfernt wird, wenn die Klemmhülse 20 über das Anschlussende 16 des Rohres 18 und über die Stützhülse 14 geschoben wird. Hierzu ist am Fittingkörper 12 ein Auswerfervorsprung 39 ausgebildet, gegen den eine Schrägfläche 40 des Abstandshalters 24 stößt, wenn die Klemmhülse 20 in Richtung des Aufwerfervorsprungs 39 geschoben wird. Fig. 14 zeigt die Situation bzw. die Konstruktion dieses Klemmfittings 10' in Richtung des Pfeils 14 der Fig. 13.

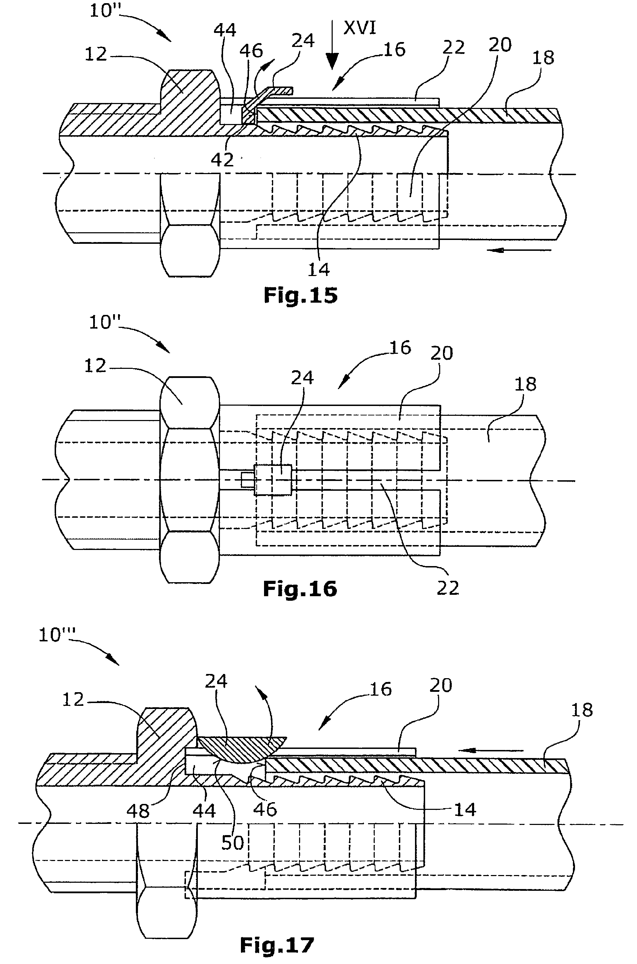

In den Fign. 15 und 16 ist ein nicht zur Erfindung gehörender Klemmfitting 10" beschrieben, bei dem der Abstandshalter 24 von dem Rohr 18 ausgeworfen wird, wenn sich das Rohr 18 nahe seiner maximalen Einschubposition befindet. Hierbei weist der Abstandshalter 24 einen Auslöseabschnitt 42 auf, der in den Ringraum 44 zwischen der Klemmhülse 20 und der Stützhülse 14 ragt. Die Stirnseite 46 des Anschlussendes 16 des Rohres 18 drückt dann gegen den Auslöseabschnitt 42 des Abstandshalters 24, der sich somit aus dem Schlitz der Hülse 20 "nach außen herausdreht".

Fig. 17 schließlich zeigt einen nicht zur Erfindung gehörenden Klemmfitting 10, bei dem die Klemmhülse 20 im aufgeweiteten Zustand am Fittingkörper 12 gehalten ist. Zu diesem Zweck weist der Fittingkörper 12 eine Ringaussparung 48 auf, die zum freien Ende der Stützhülse 14 hin offen ist und die Klemmhülse 20 klemmend umschließt. In dem Schlitz der Klemmhülse 20 befindet sich der Abstandshalter 24, der auf seiner der Stützhülse 14 zugewandten Unterseite eine Rundung 50 aufweist. In dieser Rundung ragt der Abstandshalter 24 in den Ringraum 44 zwischen der Klemmhülse 20 und der Stützhülse 14 hinein. Die Stirnseite 46 des Rohres 18 drückt nun beim Einschieben des Rohres von unten über die Rundung 50 gegen den Abstandshalter 24, so dass dieser sich aus dem Schlitz nach außen herausdreht, die Klemmhülse 20 damit freigibt und die Klemmhülse 20 somit ihre Klemmkraft auf das Anschlussende 16 des Rohres 18 ausüben kann.

## Patentansprüche

1. Klemmfitting für ein Rohr, insbesondere Kunststoffrohr oder Kunststoff-Metall-Verbundrohr, mit
- einem Fittingkörper (12), der eine Stützhülse (14) aufweist, auf die ein Ende (16) eines anzuschließenden Rohres (18) aufschiebbar ist, und
- einer eine Wandung aufweisenden Klemmhülse (20), die einen zwischen ihren axialen Enden verlaufenden, von gegenüberliegenden Flanken (28,30) der Wandung begrenzten Schlitz (22) aufweist und aufweitbar ist, wobei die Klemmhülse (20) die Stützhülse (14) und das Ende (16) des anzuschließenden Rohres (18) im auf die Stützhülse aufgeschobenen Zustand umgibt,
- wobei zur Beibehaltung des aufgeweiteten Zustandes der Klemmhülse (20) in deren Schlitz (22) ein entfernbarer Abstandshalter (24) angeordnet ist, gegen den sich die den Schlitz (22) begrenzenden Flanken (28,30) der Wandung der aufgeweiteten Klemmhülse (20) abstützen,
**dadurch gekennzeichnet,**
- **dass** der Fittingkörper (12) ein Auswerferelement (39) aufweist, gegen und/oder über das der Abstandshalter (24) beim Aufschieben der aufgeweiteten Klemmhülse (20) über das auf der Stützhülse (14) befindliche Ende (16) des anzuschließenden Rohres (18) zum Herausbewegen des Abstandshalters (24) aus dem Schlitz (22) bewegbar ist.

2. Klemmfitting für ein Rohr, insbesondere Kunststoffrohr oder Kunststoff-Metall-Verbundrohr, mit
- einem Fittingkörper (12), der eine Stützhülse (14) aufweist, auf die ein Ende (16) eines anzuschließenden Rohres (18) aufschiebbar ist, und
- einer eine Wandung aufweisenden Klemmhülse (20), die einen zwischen ihren axialen Enden verlaufenden, von gegenüberliegenden Flanken (28,30) der Wandung begrenzten Schlitz (22) aufweist und aufweitbar ist, wobei die Klemmhülse (20) die Stützhülse (14) und das Ende (16) des anzuschließenden Rohres (18) im auf die Stützhülse aufgeschobenen Zustand umgibt,
- wobei zur Beibehaltung des aufgeweiteten Zustandes der Klemmhülse (20) in deren Schlitz (22) ein entfernbarer Abstandshalter (24) angeordnet ist, gegen den sich die den Schlitz (22) begrenzenden Flanken (28,30) der Wandung der aufgeweiteten Klemmhülse (20) abstützen,
**dadurch gekennzeichnet ,**
- **dass** der Abstandshalter (24) Handhabungsorgane (36) in Form von Aussparungen aufweist, die ein Ansetzen eines Werkzeugs zum Herausziehen des Abstandshalters (24) aus dem Schlitz (22) der Klemmhülse (20) ermöglichen.

3. Klemmfitting nach einem der Ansprüche 1 oder 2, **dadurch gekennzeichnet, dass** der Schlitz (22) einen wellenförmigen oder einen sinusförmigen Verlauf entlang der Axialerstreckung der Klemmhülse (20) aufweist.

4. Klemmfitting nach einem der Ansprüche 1 oder 2, **dadurch gekennzeichnet, dass** der Schlitz (22) als Gewinde/Wendelnut ausgeführt ist.

5. Klemmfitting nach einem der Ansprüche 1 bis 3, **dadurch gekennzeichnet, dass** die Klemmhülse (20) eine strukturierte Innenseite (34) aufweist.

6. Klemmfitting nach einem der Ansprüche 1 bis 4, **dadurch gekennzeichnet, dass** die Klemmhülse (20) einen Werkstoff aufweist und/oder die Wandung der Klemmhülse (20) eine Dicke aufweist, die so gewählt ist, dass nach Aufhebung einer elastischen Aufweitung der Klemmhülse (20) diese das Ende (16) des anzuschließenden Rohres (18) dichtend und zugentlastend gegen die Stützhülse (14) drückt.

7. Klemmfitting nach einem der Ansprüche 1 bis 6, **dadurch gekennzeichnet, dass** die Klemmhülse (20) im aufgeweiteten Zustand an dem Fittingkörper (12) unter Ermöglichung einer Kontraktion bei entferntem Abstandshalter (24) gehalten ist.

8. Klemmfitting nach einem der Ansprüche 1 bis 7, **dadurch gekennzeichnet, dass** der Abstandshalter (24) einen Verpresskennzeichnungsabschnitt aufweist, der außerhalb der Wandung der Klemmhülse (20) angeordnet ist.

9. Klemmfitting nach einem der Ansprüche 1 bis 8, **dadurch gekennzeichnet, dass** die Klemmhülse (20) eine im wesentlichen zylindrische, elliptische oder andere ringartige Struktur aufweist.

10. Klemmfitting nach einem der Ansprüche 1 bis 9, **dadurch gekennzeichnet, dass** eine Kontur des Schlitzes (22) mit einem Flankenwinkel ausgeführt derart ist, der sich eine Breite des Schlitzes von einer Innenseite zur Außenseite der Klemmhülse vergrößert.

11. Klemmfitting nach einem der Ansprüche 1 bis 10, **dadurch gekennzeichnet, dass** das Material der Klemmhülse ein superplastisches Material, nämlich eine Formgedächtnislegierung umfasst.

## Claims

1. A clamp fitting for a tube, in particular a plastic tube or a plastic/metal composite tube, comprising
- a fitting body (12) comprising a supporting sleeve (14) over which an end (16) of a tube (18) to be connected can be slipped, and
- an expandable clamping sleeve (20) comprising a wall, said clamping sleeve comprising a slit (22) extending between its axial ends and limited by opposite flanks (28, 30) of the wall, wherein the clamping sleeve (20) surrounds the supporting sleeve (14) and the end (16) of the tube (18) to be connected when slipped over the supporting sleeve,
- a removable spacer (24) being arranged in the slit (22) of the clamping sleeve (20) in order to maintain it in the expanded state, the flanks (28, 30) of the wall of the expanded clamping sleeve (20), which limit the slit (22), resting against the spacer (24),
**characterized in that**
- the fitting body (12) comprises an ejector element (39) against and/or over which the spacer (24) can be moved when the expanded clamping sleeve (20) is slipped over the end (16) of the tube (18) to be connected situated on the supporting sleeve (14) for moving the spacer (24) out of the slit (22).

2. A clamp fitting for a tube, in particular a plastic tube or a plastic/metal composite tube, comprising
- a fitting body (12) comprising a supporting sleeve (14) over which an end (16) of a tube (18) to be connected can be slipped, and
- an expandable clamping sleeve (20) comprising a wall, said clamping sleeve comprising a slit (22) extending between its axial ends and limited by opposite flanks (28, 30) of the wall, wherein the clamping sleeve (20) surrounds the supporting sleeve (14) and the end (16) of the tube (18) to be connected when slipped over the supporting sleeve,
- a removable spacer (24) being arranged in the slit (22) of the clamping sleeve (20) in order to maintain it in the expanded state, the flanks (28, 30) of the wall of the expanded clamping sleeve (20), which limit the slit (22), resting against the spacer (24),
**characterized in that**
- the spacer (24) comprises manipulation elements (36) in the form of recesses which allow positioning of a tool for pulling the spacer (24) out of the slit (22) of the clamping sleeve (20).

3. The clamp fitting according to any of the claims 1 or 2, **characterized in that** the slit (22) has a wave-shaped or sinusoidal profile along the axial extension of the clamping sleeve (20).

4. The clamp fitting according to any of the claims 1 or 2, **characterized in that** the slit (22) is realized as a thread/helical groove.

5. The clamp fitting according to any of the claims 1 to 3, **characterized in that** the clamping sleeve (20) has a structured inner side (34).

6. The clamp fitting according to any of the claims 1 to 4, **characterized in that** the clamping sleeve (20) comprises a material and/or the wall of the clamping sleeve (20) has a thickness selected such that upon termination of an elastic expansion of the clamping sleeve (20) the latter presses the end (16) of the tube (18) to be connected against the supporting sleeve (14) in a sealing and strain-relieving manner.

7. The clamp fitting according to any of the claims 1 to 6, **characterized in that** the clamping sleeve (20) is retained on the fitting body (12) in the expanded state enabling a contraction when the spacer (24) is removed.

8. The clamp fitting according to any of the claims 1 to 7, **characterized in that** the spacer (24) comprises a pressing operation marking portion which is arranged outside the wall of the clamping sleeve (20).

9. The clamp fitting according to any of the claims 1 to 8, **characterized in that** the clamping sleeve (20) has an essentially cylindrical, elliptic or other ring-like structure.

10. The clamp fitting according to any of the claims 1 to 9, **characterized in that** a contour of the slit (22) is realized with a flank angle in such a manner that a width of the slit increases from an inner side to the outer side of the clamping sleeve.

11. The clamp fitting according to any of the claims 1 to 10, **characterized in that** the material of the clamping sleeve comprises a superplastic material, in particular a shape memory alloy.

## Revendications

1. Raccord à serrage pour un tuyau, en particulier un tuyau en plastique ou un tuyau composite plastique/métal, comprenant
- un corps de raccord (12) qui présente une douille d'appui (14) sur laquelle une extrémité (16) d'un tuyau à raccorder (18) peut être enfilée, et
- une douille de serrage (20) présentant une paroi, et qui présente une fente (22) s'étendant entre ses extrémités axiales et délimitée par des flancs opposés (28, 30) de la paroi et qui peut être écartée, la douille de serrage (20) entourant la douille d'appui (14) et l'extrémité (16) du tuyau à raccorder (18) lorsqu'elle est enfilée sur la douille d'appui,
- où, pour conserver l'état écarté de la douille de serrage (20), une pièce d'écartement (24) amovible, contre laquelle les flancs (28, 30) de la paroi de la douille de serrage (20) écartée qui délimitent la fente (22) prennent appui, est disposée dans la fente (22) de ladite douille de serrage (20),
**caractérisé en ce que**
- le corps de raccord (12) présente un élément éjecteur (39) contre et/ou sur lequel la pièce d'écartement (24) peut bouger lors de l'enfilage de la douille de serrage (20) écartée sur l'extrémité (16) du tuyau à raccorder (18) située sur la douille d'appui afin de sortir la pièce d'écartement (24) de la fente (22).

2. Raccord à serrage pour un tuyau, en particulier un tuyau en plastique ou un tuyau composite plastique/métal, comprenant
- un corps de raccord (12) qui présente une douille d'appui (14) sur laquelle une extrémité (16) d'un tuyau à raccorder (18) peut être enfilée, et
- une douille de serrage (20) présentant une paroi, et qui présente une fente (22) s'étendant entre ses extrémités axiales et délimitée par des flancs opposés (28, 30) de la paroi et qui peut être écartée, la douille de serrage (20) entourant la douille d'appui (14) et l'extrémité (16) du tuyau à raccorder (18) lorsqu'elle est enfilée sur la douille d'appui,
- où, pour conserver l'état écarté de la douille de serrage (20), une pièce d'écartement (24) amovible, contre laquelle les flancs (28, 30) de la paroi de la douille de serrage (20) écartée qui délimitent la fente (22) prennent appui, est disposée dans la fente (22) de ladite douille de serrage (20),
**caractérisé en ce que**
- la pièce d'écartement (24) présente des organes de manipulation (36) sous forme d'évidements, qui permettent d'appliquer un outil afin d'extraire par traction la pièce d'écartement (24) de la fente (22) de la douille de serrage (20).

3. Raccord à serrage selon l'une des revendications 1 ou 2, **caractérisé en ce que** la fente (22) présente un tracé ondulatoire ou sinusoïdal le long de l'extension axiale de la douille de serrage (20).

4. Raccord à serrage selon l'une des revendications 1 ou 2, **caractérisé en ce que** la fente (22) est réalisée comme rainure de filetage / rainure hélicoïdale.

5. Raccord à serrage selon l'une des revendications 1 à 3, **caractérisé en ce que** la douille de serrage (20) présente une face intérieure (34) structurée.

6. Raccord à serrage selon l'une des revendications 1 à 4, **caractérisé en ce que** la douille de serrage (20) présente un matériau et/ou la paroi de la douille de serrage (20) présente une épaisseur qui est choisi(e) de telle sorte que, après suppression d'un écartement élastique de la douille de serrage (20), celle-ci appuie l'extrémité (16) du tuyau à raccorder (18) contre la douille d'appui (14) de manière étanche et en décharge de traction.

7. Raccord à serrage selon l'une des revendications 1 à 6, **caractérisé en ce que** la douille de serrage (20) est maintenue écartée au niveau du corps de raccord (12) en permettant une contraction lorsque la pièce d'écartement (24) est enlevée.

8. Raccord à serrage selon l'une des revendications 1 à 7, **caractérisé en ce que** la pièce d'écartement (24) présente une partie de repérage de compression qui est située à l'extérieur de la paroi de la douille de serrage (20).

9. Raccord à serrage selon l'une des revendications 1 à 8, **caractérisé en ce que** la douille de serrage (20) présente une structure sensiblement cylindrique, elliptique ou autre structure de type annulaire.

10. Raccord à serrage selon l'une des revendications 1 à 9, **caractérisé en ce qu'**un contour de la fente (22) réalisé avec un angle de flanc est tel qu'une largeur de la fente s'agrandit d'une face intérieure à une face extérieure de la douille de serrage.

11. Raccord à serrage selon l'une des revendications 1 à 10, **caractérisé en ce que** le matériau de la douille de serrage comporte un matériau superplastique, notamment un alliage à mémoire de forme.
